# EUROPÄISCHE PATENTSCHRIFT

(11) **EP 2 626 566 B1**
(45) Veröffentlichungstag und Bekanntmachung des Hinweises auf die Patenterteilung: **28.07.2021**
(21) Anmeldenummer: 12154494.4
(22) Anmeldetag: 08.02.2012
(51) Int. Cl.: F04D 13/06, H02K 5/18, H02K 9/14, H02K 11/00

(54) **Elektromotor**
Electric motor
Moteur électrique

(43) Veröffentlichungstag der Anmeldung: 14.08.2013
(73) Patentinhaber: Grundfos Holding A/S, 8850 Bjerringbro (DK)
(72) Erfinder: Saaby Mikkelsen, Knud Jørgen, 8643 Ans by (DK); Breitzke Bjørn,, 8850 Bjerringbro (DK); Heelund Steen,, 8850 Bjerringbro (DK)
(74) Vertreter: Patentanwälte Vollmann Hemmer Lindfeld Partnerschaft mbB

(56) Entgegenhaltungen:
- DE-A1-102005 032 969
- DE-U1- 20 004 905
- DE-U1- 20 007 099

## Beschreibung

Die Erfindung betrifft einen Elektromotor, insbesondere einen Nasslaufmotor zum Antrieb einer Kreiselpumpe mit den im Oberbegriff des Anspruchs 1 angegebenen Merkmalen.

Um die im Elektromotor beim Betrieb anfallende Verlustwärme abführen zu können, zählt es zum Stand der Technik, Elektromotoren über den gesamten Umfang ihres Motorgehäuses mit Kühlrippen zu versehen, die mehr oder weniger parallel zur Längsachse des Motors angeordnet sind und durch Konvektionskühlung die Motorwärme abführen sollen. Unterstützt wird dies häufig durch ein auf der Motorwelle sitzendes Lüfterrad, welches über eine Lüfterhaube axial Luft ansaugt und diese dann längs der Kühlrippen leitet, um auf diese Weise die Abwärme des Motors über diesen Luftstrom abzuführen.

Mit kleiner werdender Leistungselektronik haben sich zwischenzeitlich Elektromotoren, insbesondere zum Antrieb von Kreiselpumpen, durchgesetzt, welche in dem am Elektromotor vorgesehenen Klemmenkasten, der ursprünglich ausschließlich zum elektrischen Anschluss des Motors diente, elektronische Schaltungen und insbesondere auch Leistungselektronik, typischerweise die eines elektronischen Drehzahlstellers, für den Motor beinhalten. Der Klemmenkasten bildet damit bei modernen Motoren gleichzeitig ein Elektronikgehäuse. Allerdings liegt die Abwärme solcher heutzutage verwendeten Leistungselektronik in der Größenordnung der Motorabwärme, weshalb es zum Stand der Technik zählt, nicht nur den Elektromotor selbst mit Kühlrippen zu versehen, sondern auch den Klemmenkasten, also das daran befindliche Elektronikgehäuse. Dabei hat es sich bewährt, die Kühlrippen des Elektronikgehäuses ebenfalls in Längsrichtung des Motors, also parallel zu den Längsrippen des Motors verlaufen zu lassen, um so mit dem Kühlluftstrom des Motors auch das Elektronikgehäuse zu kühlen. Ein solcher Motor ist z.B. aus DE 10 2005 032 969 A1 bekannt.

Bei modernen Permanentmagnetrotoren ist die Abwärme des Motors aufgrund des vergleichsweise guten Wirkungsgrades deutlich geringer als beispielsweise bei Asynchronmotoren oder Gleichstrommotoren früherer Bauart. Damit verlagert sich der Kühlbedarf insbesondere bei mit Drehzahlsteller gesteuerten Motoren vom Motorgehäuse zum Elektronikgehäuse hin. Dem geringeren Kühlbedarf des Motors Rechnung tragend werden die Kühlrippen kleiner dimensioniert, was jedoch für die Kühlung des Elektronikgehäuses eher nachteilig ist.

Vor diesem Hintergrund liegt der Erfindung die Aufgabe zugrunde, einen gattungsgemäßen Elektromotor hinsichtlich der Kühlrippenausbildung unter Berücksichtigung der eingangs dargelegten Problematik zu verbessern.

Diese Aufgabe wird gemäß der Erfindung durch einen Elektromotor mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben.

Der erfindungsgemäße Elektromotor umfasst die im Anspruch 1 angegebenen Merkmale. Gemäss der Erfindung erstrecken sich die Kühlrippen nur über einen Teil des Umfangs des Motorgehäuses.

Grundgedanke der vorliegenden Erfindung ist es, das Motorgehäuse, nicht wie beim Stand der Technik üblich, vollständig oder zumindest über die Bereiche zu berippen, bei denen dies konstruktiv möglich ist, sondern gezielt einen Teil des Umfangs des Motorgehäuses kühlrippenfrei zu belassen. Es werden also die Kühlrippen nicht verkleinert, sondern stattdessen vergleichsweise große Kühlrippen vorgesehen, die sich jedoch nur über einen Teil des Umfangs des Motorgehäuses erstrecken. Ziel und Zweck dieser Anordnung ist es, zum einen konstruktive Freiräume am Motor zu schaffen, zum anderen insbesondere in den Bereichen, in denen motorgehäuseseitig keine Kühlrippen vorgesehen sind, Freiräume für Kühlrippen des Elektronikgehäuses zu schaffen. Eine solche Ausbildung ist insbesondere für Elektromotoren vorteilhaft, die einen Permanentmagnete tragenden Rotor aufweisen und vergleichsweise wenig Abwärme erzeugen. Besonders vorteilhaft ist die erfindungsgemäße Ausbildung also für Permanentmagnetmotoren, die als Nasslaufmotoren ausgebildet sind und zum Antrieb einer Kreiselpumpe bestimmt sind, da aufgrund des sich an das Motorgehäuse anschließenden Pumpengehäuses Kühlluftströme nur im Bereich des Motorgehäuses selbst geführt werden können und dies auch nur dort, wo An- und Abströmung durch das angeschlossene Pumpengehäuse nicht behindert sind.

Gemäß einer vorteilhaften Weiterbildung der Erfindung weist das Motorgehäuse einen runden, vorzugsweise kreisrunden Querschnitt auf und ist nur umfangsseitig berippt. Eine solche Anordnung bedingt typischerweise, dass der Motor mittels des Pumpengehäuses gehalten wird, also keinen Standfuß benötigt. Ein solches im Querschnitt kreisrundes Motorgehäuse ist zum einen besonders kompakt und weist zum anderen von Innen heraus eine gleichmäßige Wärmeverteilung auf, da der Stator allseits in gleichem Abstand anliegt. Die nur umfangsseitige Berippung ist vorteilhaft und verringert die axiale Baulänge des Motors.

Erfindungsgemäß erstrecken sich die Kühlrippen am Motorgehäuse nicht wie üblich in Längsrichtung der Motorachse sondern quer zur Motorachse. Hierdurch wird in Verbindung mit der Anordnung des Motors mit horizontaler Motorachse ein Konvektionsstrom längs der Kühlrippen ausgebildet, welcher das Motorgehäuse von unten nach oben gleichmäßig umströmt.

Besonders vorteilhaft ist es, wenn sich die Kühlrippen nur in einem Bereich zwischen 190° - 240° des Umfangs des Motorgehäuses erstrecken, da dann eine parallel zur Motorachse gebildete Fläche verbleibt, die konstruktiv für andere Maßnahmen als zur Motorkühlung genutzt werden kann. Dabei ist es von Vorteil, wenn die Kühlrippenanordnung so ausgebildet ist, dass bei horizontal liegendem Motor sich die Rippen jeweils von der Unterseite rechtsherum bzw. linksherum um das Motorgehäuse über einen Winkel von 95° - 120° erstrecken, sodass an der Oberseite eine Art freie Plattform verbleibt, insbesondere wenn die Höhe der Rippen zum Auslaufende hin größer gewählt wird, als im übrigen Bereich.

Gemäß einer vorteilhaften Ausgestaltung der Erfindung erstrecken sich die Kühlrippen des Motorgehäuses nicht nur um einen Teil des Umfangs sondern darüber hinaus auch nur über einen Längsabschnitt des Motorgehäuses, sodass ein weiterer Längsabschnitt verbleibt, der rippenfrei ausgebildet ist. Eine solche rippenfreie Ausbildung ist insbesondere im Bereich des Anschlusses an das Pumpengehäuse von Vorteil, da dadurch eine sehr kompakte Pumpenkonstruktion erzielt werden kann, insbesondere bei einem mit Anschlussflanschen versehenen Inlinegehäuse der Abstand der Flansche bzw. das dazwischen liegende Pumpengehäuse klein gewählt werden kann.

Erfindungsgemäß bildet das Motorgehäuse im nicht berippten Umfangsbereich eine Montagebasis für ein Elektronikgehäuse, welches Leistungselektronik zur Steuerung des Motors aufweist, typischerweise zumindest die Leistungselektronik eines elektronischen Drehzahlstellers, insbesondere eines Frequenzumrichters. Eine solche Anordnung ist vorteilhaft, da sie zum einen vergleichsweise großen Freiraum für das Elektronikgehäuse bietet, zum anderen den kühlrippenfreien Bereich des Motorsgehäuses in idealer Weise konstruktiv ausnutzt.

Um auch die Kühlung des erfindungsgemäß am Motorgehäuse montierten Elektronikgehäuses in die Motorkühlung zu integrieren bzw. dafür zu sorgen, dass ein Konvektionsluftstrom sowohl das Motor- als auch das Elektronikgehäuse kühlt, ist es erfindungsgemäß vorgesehen, dass das Elektronikgehäuse zum Motorgehäuse hin weisende Kühlrippen aufweist, welche bevorzugt in Flucht zu den motorseitigen Kühlrippen angeordnet sind. Dann bildet sich bei horizontaler Achsanordnung des Motors und oben liegendem Elektronikgehäuse eine intensive Konvektionsströmung, welche zunächst von der Unterseite kommend das Motorgehäuse und dann die fluchtenden Kühlrippen des Elektronikgehäuses umstreicht. Da bei modernen Permanentmagnetmotoren die Abwärme des Motors geringer als die der Motorleistungselektronik ist, ist eine solche Anordnung auch insoweit vorteilhaft, da die am Motor vorbeistreichende Luft noch nicht soweit aufgeheizt ist, dass sie von den Kühlrippen des Elektronikgehäuses keine Wärme mehr aufnehmen könnte.

Besonders vorteilhaft ist es, wenn das Motorgehäuse und/oder das Elektronikgehäuse als Gussgehäuse aus gut wärmeleitendem Werkstoff bestehen, vorzugsweise aus einer Leichtmetalllegierung. Dabei sollte die Wärmeleitfähigkeit des Werkstoffes mindestens 10 W/m·K bei 0°C, bevorzugt mindestens 100 W/m·K bei 0°C aufweisen, um eine intensive Wärmeabfuhr in diesem Bereich vom Motor und Elektronikgehäuse zu gewährleisten.

Die Erfindung ist nachfolgend anhand eines in der Zeichnung dargestellten Ausführungsbeispiels näher erläutert. Es zeigen:
- Fig. 1: in stark schematisierter Längsschnittdarstellung einen Elektromotor mit daran angeschlossener Kreiselpumpe,
- Fig. 2: in perspektivischer Darstellung das Motorgehäuse des Elektromotors gemäß Fig. 1 mit darauf angeordnetem Elektronikgehäuse,
- Fig. 3: in perspektivischer Darstellung das Motorgehäuse ohne Elektronikgehäuse,

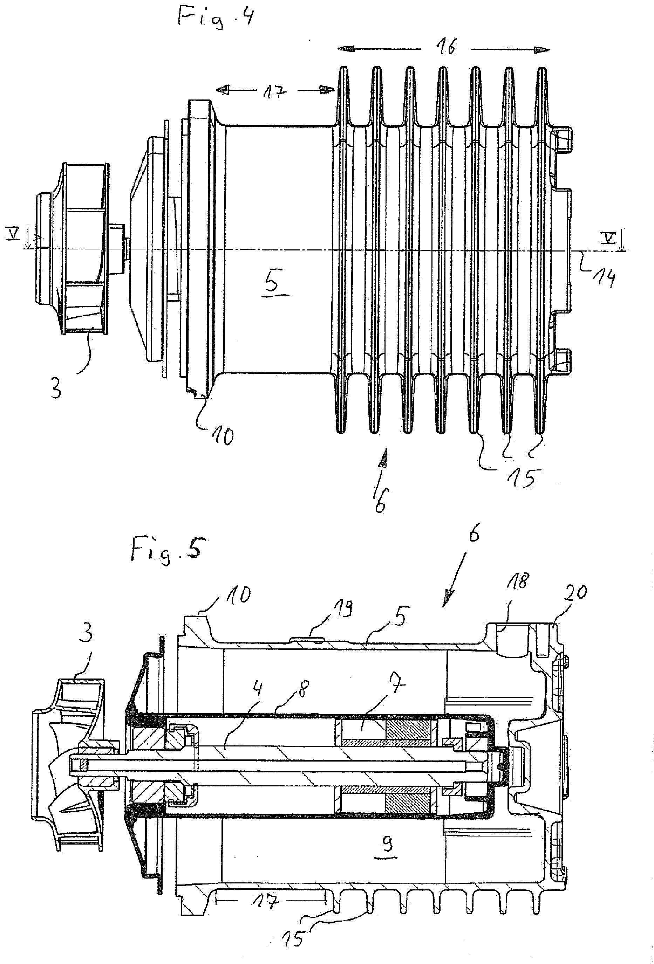

- Fig. 4: eine Ansicht des Elektromotors von unten und
- Fig. 5: einen Längsschnitt längs der Schnittlinie V-V in Fig. 4.

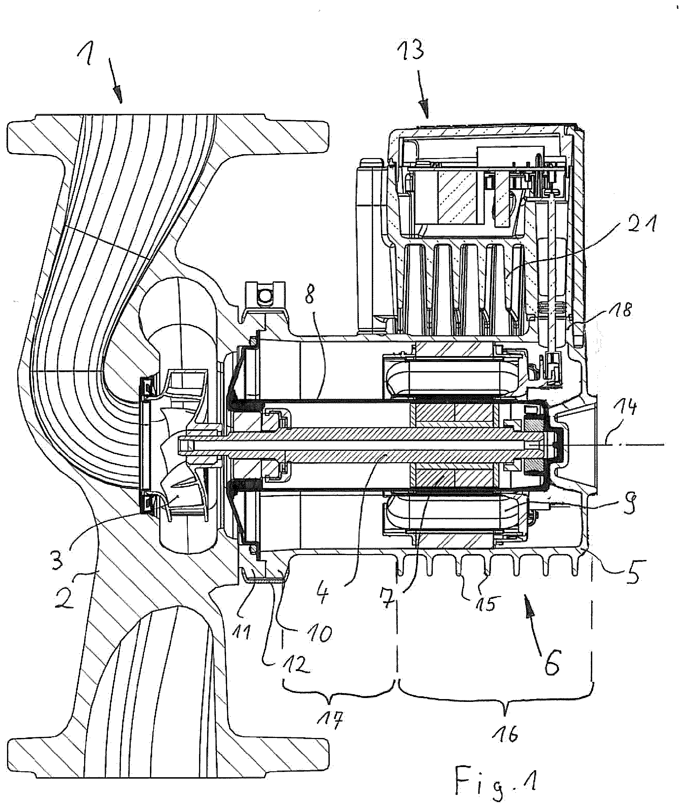

Das anhand von Fig. 1 dargestellte Kreiselpumpenaggregat weist eine Kreiselpumpe 1 mit einem Pumpengehäuse 2 und einem drehbar darin angeordneten Kreiselrad 3 auf, welches auf einer Welle 4 eines an das Pumpengehäuse 2 anschließenden Motorgehäuses 5 eines Elektromotors 6 sitzt. Bei dem Elektromotor 6 handelt es sich um einen Nasslaufmotor, d. h. der Raum, in welchem der Rotor 7 mit der Welle 4 läuft, ist flüssigkeitsgefüllt und durch ein Spaltrohr 8 vom Stator 9 fluiddicht getrennt. Der Stator 9 sitzt in dem im Querschnitt kreisrunden Motorgehäuse 5, welches mittels eines Flansches 10 mit einem Flansch 11 des Pumpengehäuses über einen Spannring 12 lösbar verbunden ist.

Bei dem Elektromotor handelt es sich um einen Permanentmagnetrotor, der von einem elektronischen Drehzahlsteller angesteuert wird, der in einem Elektronikgehäuse 13 angeordnet ist, welches nach Art eines Klemmenkastens am Motorgehäuse 5 befestigt ist und über das auch die elektrische Anschlussverbindung des Motors erfolgt.

Das Motorgehäuse 5 weist in dieser Ausführungsform sieben quer zur Motorachse 14 verlaufende Kühlrippen 15 auf, welche sich in einem Längsabschnitt 16 über einen Teil des Außenumfangs des Motorgehäuses 5 erstrecken. Darüber hinaus weist das Motorgehäuse noch einen Längsabschnitt 17 auf, welcher kühlrippenfrei ist. Er erstreckt sich zwischen dem Flansch 10 und dem Elektronikgehäuse 3.

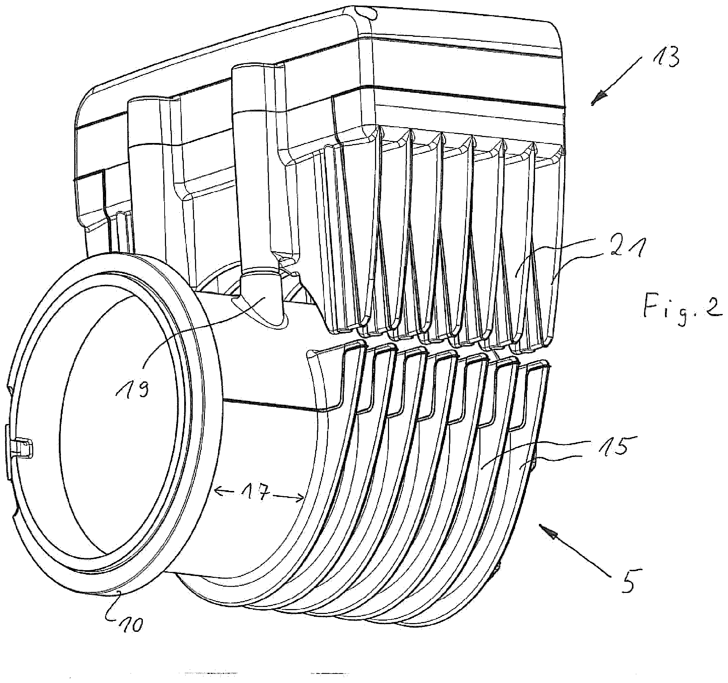

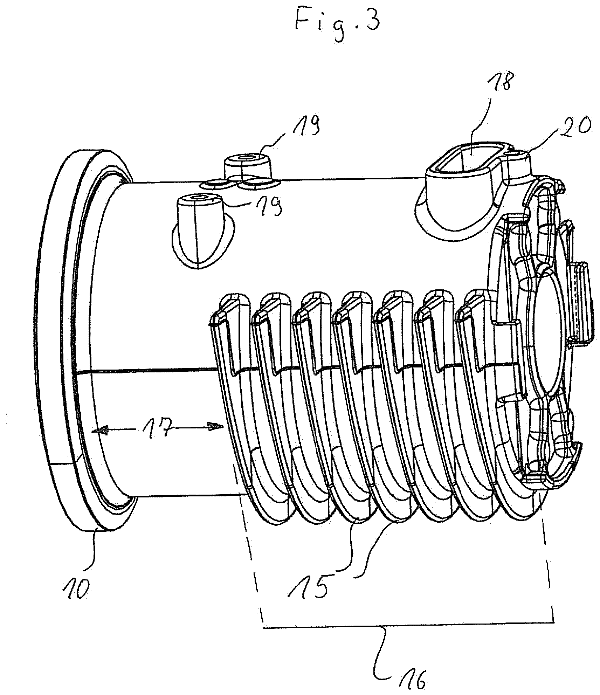

Die Kühlrippen 15 erstrecken sich, wie insbesondere aus Fig. 3 ersichtlich ist, nicht über den gesamten Umfang des Motorgehäuses, sondern über etwa 210° des Umfangs, und zwar in der Stellung gemäß den Fig. 1 und 2 von der Unterseite des Motorgehäuses 5 jeweils um ca. 105° zu beiden Seiten nach oben. Dabei vergrößert sich die Höhe der Rippen von einem Bereich von ca. 80° des Umfangs (von unten beginnend) bis zum Ende hin deutlich, wie insbesondere aus Fig. 2 ersichtlich ist. Auf diese Weise ergibt sich ein rippenfreier Umfangsabschnitt des Motorgehäuses 5 im Bereich des sonst mit Rippen 15 versehenen Längsabschnitts 16 des Motorgehäuses 5. In diesem Bereich weist das Motorgehäuse 5 nahe dem freien Ende des Motors einen Sockel 18 auf, welcher eine langlochförmige Ausnehmung im Motorgehäuse 5 umgibt und über welchen die elektrische Leitungsverbindung zwischen Stator und dem darüber angeordneten Elektronikgehäuse 13 erfolgt. Davon beabstandet im rippenfreien Bereich sind zwei im Querschnitt etwa kreisförmige Sockel 19 vorgesehen, welche ausschließlich zur Befestigung dienen und mit jeweils einer Gewindebohrung versehen sind. Diese drei Sockel 18 und 19 dienen zur Auflage des darüber befindlichen Elektronikgehäuses 13, welches in den Gewindebohrungen der Sockel 19 schraubbefestigt ist und durch den breiten Sockel 18 mit dem Inneren des Statorgehäuses zum Zwecke der Leitungsdurchführung verbunden ist. Der breite Sockel 18 weist eine Ausbuchtung 20 auf, welche mit einer Gewindebohrung versehen und zur Schraubbefestigung des Elektronikgehäuses 13 in diesem Bereich vorgesehen ist.

Das Elektronikgehäuse 13 ist, wenn es auf dem Motorgehäuse 5 befestigt ist, erfindungsgemäß so angeordnet, dass es ebenfalls quer zur Motorachse 14 angeordnete Kühlrippen 21 aufweist, die von dem im Wesentlichen rechteckigen Gehäuse, welches vom Motorgehäuse 5 beabstandet ist, in dem beabstandeten Bereich nach unten bis kurz vor den rippenfreien Bereich im Längsabschnitt 16 des Motorgehäuses 5 ragen. Diese, sich vom Boden des Elektronikgehäuses zum Motorgehäuse 5 hin erstreckenden Rippen sind fluchtend zu den Kühlrippen 21 des Motorgehäuses angeordnet, sodass sich in der in den Fig. 1 und 2 dargestellten Motorstellung ein Konventionsluftstrom von der Unterseite des Motorgehäuses nach oben erstreckend bis unter das Elektronikgehäuse und von dort zu den Seiten bildet. Aufgrund der Nichtberippung des Motorgehäuses 5 im oberen Bereich, d. h. dort, wo das Elektronikgehäuse 13 anschließt, können hier die Kühlrippen 21 des Elektronikgehäuses 13 vorgesehen sein, die im Wesentlichen höher ausgebildet sind als die des Motorgehäuses 5 und somit einen Kühlkörper am Boden des Elektronikgehäuses bilden. Dadurch, dass die Kühlrippen 16 und 21 zueinander fluchtend ausgebildet sind, bildet sich unabhängig von der Stellung des Motors - dieser kann in Bezug auf das Pumpengehäuse 2 in der Flanschverbindung beliebig um 360° gedreht werden - eine Konvektionsströmung zwischen den Kühlrippen aus, welche eine intensive Kühlung, insbesondere auch im Bereich des Elektronikgehäuses 13, bewirkt.

Das Motorgehäuse 5 und das Elektronikgehäuse 13 sind aus Metall gebildet, es handelt sich hierbei um Gussbauteile, die aus einer Leichtmetalllegierung bestehen und eine gute Wärmeleitfähigkeit aufweisen.

## Patentansprüche

1. Elektromotor zum Betrieb mit horizontaler Achsanordnung, insbesondere Nasslaufmotor zum Antrieb einer Kreiselpumpe (1), mit einem Rotor (7) mit Motorwelle (4), der drehbar in einem Motorwicklungen aufweisenden Stator (9) angeordnet ist, mit einem den Stator (9) aufnehmenden Motorgehäuse (5), welches umfangseitige Kühlrippen (15) zur Abfuhr der im Motor (6) entstehenden Wärme aufweist, wobei sich die Kühlrippen (15) des Motors (6) nur über einen Teil des Umfangs des Motorgehäuses (5) erstrecken und das Motorgehäuse (5) im nicht berippten Umfangsbereich eine Montagebasis (18, 19) für ein Elektronikgehäuse (13) bildet, welches am Motorgehäuse montiert ist und Leistungselektronik zur Steuerung des Motors (6) aufweist und welches zum Motorgehäuse (5) hin weisende Kühlrippen (21) aufweist, **dadurch gekennzeichnet, dass** sich die Kühlrippen (15) des Motors (6) und die Kühlrippen (21) des Elektronikgehäuses (13) quer zur Motorachse (14) erstrecken.

2. Elektromotor nach Anspruch 1, **dadurch gekennzeichnet, dass** das Motorgehäuse (5) einen runden, vorzugsweise kreisrunden Querschnitt aufweist und nur umfangseitig berippt ist.

3. Elektromotor nach Anspruch 1 oder 2, **dadurch gekennzeichnet, dass** sich die Kühlrippen (15) nur in einem Bereich zwischen 190° und 240° des Umfangs des Motorgehäuses (5) erstrecken.

4. Elektromotor nach einem der vorhergehenden Ansprüche, **dadurch gekennzeichnet, dass** die Kühlrippen (15) nur über einen Längsabschnitt (16) des Motorgehäuses (5) angeordnet sind und ein weiterer Längsabschnitt (17) rippenfrei ausgebildet ist.

5. Elektromotor nach einem der vorhergehenden Ansprüche, **dadurch gekennzeichnet, dass** die zum Motorgehäuse (5) hin weisenden Kühlrippen (21) des Elektronikgehäuses in Flucht zu den Kühlrippen (15) des Motorgehäuses (5) angeordnet sind.

6. Elektromotor nach einem der vorhergehenden Ansprüche, **dadurch gekennzeichnet, dass** das Motorgehäuse (5) und/oder das Elektronikgehäuse (13) als Gussgehäuse aus Werkstoffen mit einer Wärmeleitfähigkeit von mindestens 10 W/m K bei 0°C, vorzugsweise von mindestens 100 W/m K bei 0°C bestehen, vorzugsweise aus einer Leichtmetalllegierung.

## Claims

1. An electric motor for operation with a horizontal axis arrangement, in particular wet-running motor for the drive of a centrifugal pump (1), with a rotor (7) with a motor shaft (4), said rotor being rotatably arranged in a stator (9) comprising motor windings, with a motor housing (5) which receives the stator (9) and which comprises cooling ribs (15) on the peripheral side for leading away heat arising in the motor (6), wherein the cooling ribs (15) of the motor (6) only extend over a part of the periphery of the motor housing (5) and the motor housing (5) in the non-ribbed peripheral region forms an assembly base (18, 19) for an electronics housing (13) which is assembled on the motor housing and comprises power electronics for the control of the motor (6) and which comprises cooling ribs (21) which point towards the motor housing (5), **characterised in that** the cooling ribs (15) of the motor (6) and the cooling ribs (21) of the electronics housing (13) extend transversely to the motor axis (14).

2. An electric motor according to claim 1, **characterised in that** the motor housing (5) has a round, preferably circular cross section and is only ribbed on the peripheral side.

3. An electric motor according to claim 1 or 2, **characterised in that** the cooling ribs (15) extend only in a region between 190° to 240° of the periphery of the motor housing (5).

4. An electric motor according to one of the preceding claims, **characterised in that** the cooling ribs (15) are arranged only over a longitudinal section (16) of the motor housing (5), and a further longitudinal section (17) is designed in a rib-free manner.

5. An electric motor according to one of the preceding claims, **characterised in that** the cooling ribs (21) of the electronics housing which point towards the motor housing (5) are arranged aligned to the cooling ribs (15) of the motor housing (5).

6. An electric motor according to one of the preceding claims, **characterised in that** the motor housing (5) and/or the electronics housing (13) as cast housings consist of materials with a thermal conductivity of at least 10 W/m K at 0°C, preferably of at least 100 W/m K at 0°C, preferably of a light metal alloy.

## Revendications

1. Moteur électrique destiné à un fonctionnement avec un agencement d'axe horizontal, notamment moteur fonctionnant en milieu humide pour l'entraînement d'une pompe centrifuge (1), comprenant un rotor (7) avec un axe de moteur (4) disposé de façon rotative dans un stator (9) comportant des enroulements de moteur, et un carter de moteur (5) recevant le stator (9) et comportant en périphérie des ailettes de refroidissement (15) pour l'évacuation de la chaleur engendrée dans le moteur (6), les ailettes de refroidissement (15) du moteur (6) s'étendant uniquement sur une partie de la périphérie du carter de moteur (5) et le carter de moteur (5) constituant dans la partie de périphérie non pourvue d'ailettes, une base de montage (18, 19) pour un boîtier électronique (13) qui est monté sur le carter de moteur et comprend de l'électronique de puissance pour la commande du moteur (6) et qui comprend des ailettes de refroidissement (21) orientées vers le carter de moteur (5), **caractérisé en ce que** les ailettes de refroidissement (15) du moteur (6) et les ailettes de refroidissement (21) du boîtier électronique (13) s'étendent transversalement à l'axe de moteur (14).

2. Moteur électrique selon la revendication 1, **caractérisé en ce que** le carter de moteur (5) présente une coupe transversale ronde, de préférence circulaire et qu'il n'est pourvu d'ailettes que sur la périphérie.

3. Moteur électrique selon la revendication 1 ou 2, **caractérisé en ce que** les ailettes de refroidissement (15) ne s'étendent que dans une zone située entre 190° et 240° de la périphérie du carter de moteur (5).

4. Moteur électrique selon l'une des revendications précédentes, **caractérisé en ce que** les ailettes de refroidissement (15) ne sont disposés que sur une partie longitudinale (16) du carter de moteur (5), et qu'une autre partie longitudinale (17) est formée sans ailettes.

5. Moteur électrique selon l'une des revendication précédentes, **caractérisé en ce que** les ailettes de refroidissement (21) du boîtier électronique orientées vers le carter de moteur (5) sont alignées sur les ailettes de refroidissement (15) du carter de moteur (5).

6. Moteur électrique selon l'une des revendications précédentes, **caractérisé en ce que** le carter de moteur (5) et/ou le boîtier électronique (13) sont constitué comme carter en fonte se composent de matériaux ayant une conductivité thermique d'au moins 10W/m K à 0° C, de préférence d'au moins 100W/m K à 0° C, ou sont constitués de préférence d'un alliage en métal léger.
